Europäisches Patentamt

**European Patent Office**

Office européen des brevets

(19)

(11) Numéro de publication: **0 044 256**

**A1**

(12) **DEMANDE DE BREVET EUROPEEN**

(21) Numéro de dépôt: **81401123.5**

(22) Date de dépôt: **10.07.81**

(51) Int. Cl.³: **F 24 J 3/02**

(30) Priorité: **11.07.80 FR 8015481**
**10.04.81 FR 8107241**

(43) Date de publication de la demande:
**20.01.82 Bulletin 82/3**

(84) Etats contractants désignés:
**AT BE CH DE FR GB IT LI LU NL SE**

(71) Demandeur: **NOVELERG Société Anonyme dite:**
**12, rue de la Baume**
**F-75008 Paris(FR)**

(71) Demandeur: **Jean NEUHAUS S.A. Sociéte Anonymes**
**dite:**
**Béhobie**
**F-64700 HENDAYE(FR)**

(72) Inventeur: **Berthet, Michel**
**3, Domaine de Miremont**
**F-91190 Gif Sur Yvette(FR)**

(72) Inventeur: **Brouard, Dominique**
**23, rue St-Amand**
**F-75015 Paris(FR)**

(72) Inventeur: **Kermarrec, Jean-Claude**
**73bis, rue Lavoisier**
**F-78140 Velizy-Villacoublay(FR)**

(72) Inventeur: **Lockhart, Jacques**
**50, rue du Fg Saint-Denis**
**F-75010 Paris(FR)**

(74) Mandataire: **Weinmiller, Jürgen et al,**
**Zeppelinstrasse 63**
**D-8000 München 80(DE)**

(54) **Capteur solaire et application à la climatisation d'un bâtiment.**

(57) Le capteur élémentaire (3) comprend une tôle émaillée
(3a) et une tôle galvanisée (3b), assemblées par sertissage
pour former une gaine, suspendue à une paroi (2) d'un
bâtiment.

Plusieurs capteurs élémentaires (3) sont reliées entre
eux de manière étouche pour former un dispositif de
climatisation solaire d'un bâtiment.

FIG.6

EP 0 044 256 A1

Capteur solaire et application à la climatisation d'un bâtiment

La présente invention est relative à une structure de capteur solaire à air. Elle vise également l'application d'un tel capteur à la climatisation d'un bâtiment.

Un but de l'invention est de réaliser un capteur solaire modulaire, de construction bon marché, pouvant être aisément associé à d'autres capteurs du même type pour former des gaines et, de plus, pouvant être commodément fixé sur une paroi verticale ou oblique.

L'invention a pour objet un capteur solaire à air caractérisé en ce qu'il comprend une pluralité de capteurs élémentaires, chaque capteur élémentaire étant formé de deux tôles assemblées de manière à définir une surface sensiblement parallélépipédique, l'une des tôles destinée à être exposée au soleil, étant émaillée, l'autre étant galvanisée, le bord d'un capteur élémentaire étant muni d'un joint assurant une liaison étanche avec le bord d'un capteur élémentaire adjacent, les capteurs élémentaires étant disposés bout à bout de manière à former une gaine.

Avantageusement, le capteur élémentaire est muni d'au moins deux pattes présentant une portion crochue pour être suspendu à un profilé horizontal fixé à une paroi d'un bâtiment.

L'invention a également pour objet un dispositif de génération et de circulation d'air chaud alimentant un dispositif de climatisation d'un bâtiment comprenant une pluralité de gaines verticales formées de capteurs solaires adjacents, lesdites gaines étant disposées entre une paroi du bâtiment et un vitrage, caractérisé par le fait que les gaines sont reliées entre elles deux par deux à leur extrémité inférieure et qu'une gaine de chaque paire est reliée au voisinage de son autre extrémité, par un premier conduit, à une première canalisation d'air froid, l'autre gaine de la paire étant reliée, au voisinage de son autre extrémité, par un second conduit à une seconde canalisation, les canalisations étant disposées au voisinage du sommet du bâtiment et constituant l'entrée et la sortie dudit dispositif de climatisation du bâtiment.

L'invention sera bien comprise par la description donnée ci-après d'un mode préféré de réalisation de capteur solaire à air et de son application à la climatisation d'un bâtiment, en référence au dessin annexé dans lequel :

- la figure 1 est une vue de face d'une partie de bâtiment muni de gaines formées de capteurs solaires à air

- la figure 2 est une vue en coupe selon la ligne II-II de la figure 1

- la figure 3 est une vue en coupe selon la ligne III-III de la figure 1

- les figures 4A et 4B représentent une vue en coupe selon la ligne IV-IV de la figure 1

- la figure 5 représente une vue en perspective partielle d'un capteur à air placé en position de fonctionnement

- la figure 6 est une vue en coupe horizontale d'une façade équipée de capteurs à air

- la figure 7 montre un détail de réalisation d'un capteur à air

- la figure 8 est une vue en coupe selon la ligne VIII-VIII de la figure 6

- la figure 9 représente, vus en coupe, les joints dont est muni un capteur.

La figure 10 représente, vue en coupe transversale, une installation de production d'air chaud selon une variante.

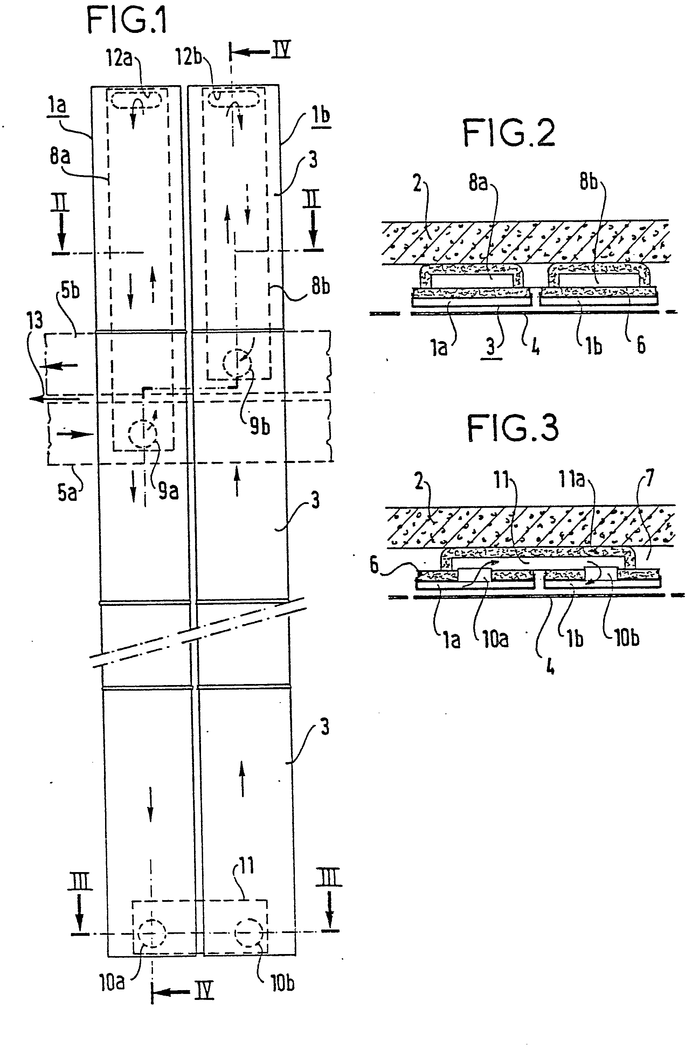

En se référant aux figures 1 à 3, on voit un élément d'équipement de climatisation d'un bâtiment, comprenant deux gaines 1a et 1b, disposées côte à côte verticalement le long d'une façade 2 d'un bâtiment. Chaque gaine est formée par un empilement de capteurs solaires à air et est disposée entre la façade 2 et un vitrage 4.

Le dispositif de climatisation du bâtiment comprend ainsi une pluralité de couples de gaines ; un seul couple a été représenté dans la figure 1.

Les gaines d'un couple sont reliées entre elles à leur partie inférieure comme le montre la figure 3.

A la partie supérieure, au voisinage du sommet du bâtiment, la gaine 1a débouche dans une première canalisation 5a (canalisation d'air froid), la gaine 1b débouche dans une seconde canalisation 5b (canalisation d'air chaud). Les canalisations 5b et 5a constituent respectivement les entrée et sortie d'un dispositif 13 de climatisation non représenté.

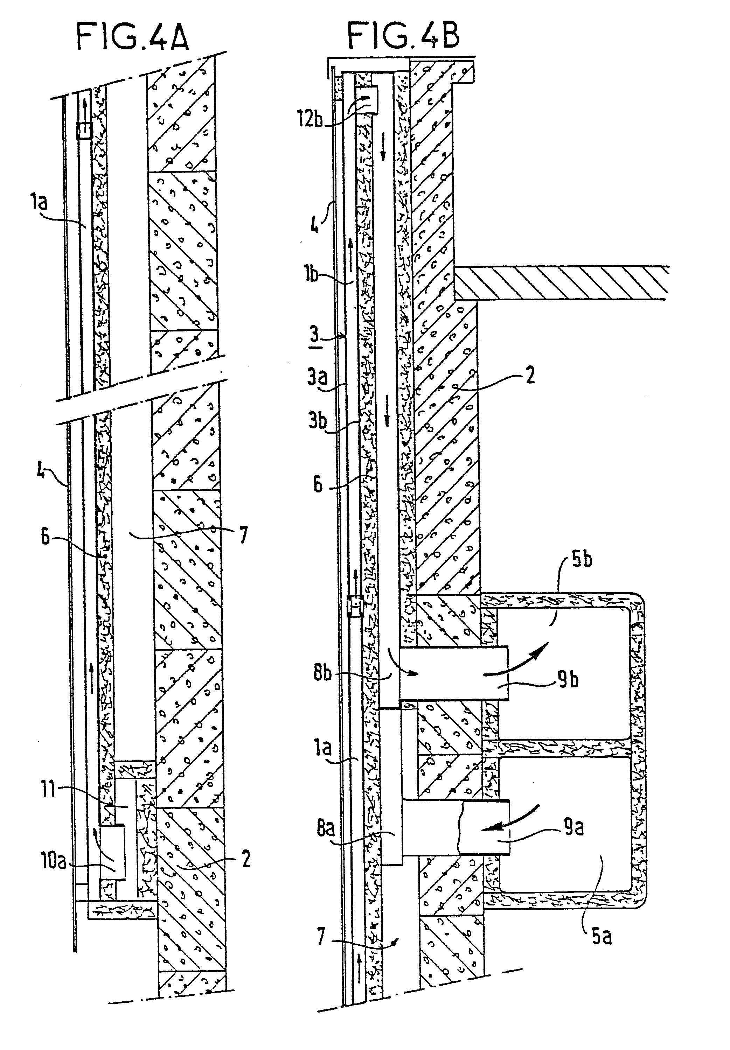

Les figures 4A et 4B permettent de mieux voir les détails des gaines. Les flèches qui figurent dans les figures 1, 4A et 4B montrent les directions de circulation de l'air.

Entre les gaines et la façade, on trouve d'une part une isolation 6, d'autre part un espace libre 7 dont la partie supérieure est utilisée pour disposer des gaines auxiliaires 8a et 8b reliées par des conduits 9a et 9b aux canalisations 5a et 5b.

Cette disposition est nécessitée par le fait que les canalisations 5a et 5b ne peuvent qu'être placées légèrement au-dessous du niveau supérieur des gaines 1a et 1b.

La liaison inférieure des gaines se fait grâce à des orifices 10a et 10b percés respectivement dans le dernier capteur inférieur de chaque gaine et débouchant dans un espace 11, avantageusement calorifugé au moyen d'une isolation 11a.

La liaison supérieure des gaines 1a, 1b aux gaines auxiliaires 8a, 8b se fait grâce à des orifices 12a et 12b pratiqués dans le dernier capteur supérieur de chaque gaine. Si les couples de gaines n'ont pas même hauteur, on pourra prévoir dans les conduits 8b et 8a des organes de réglage du débit d'air.

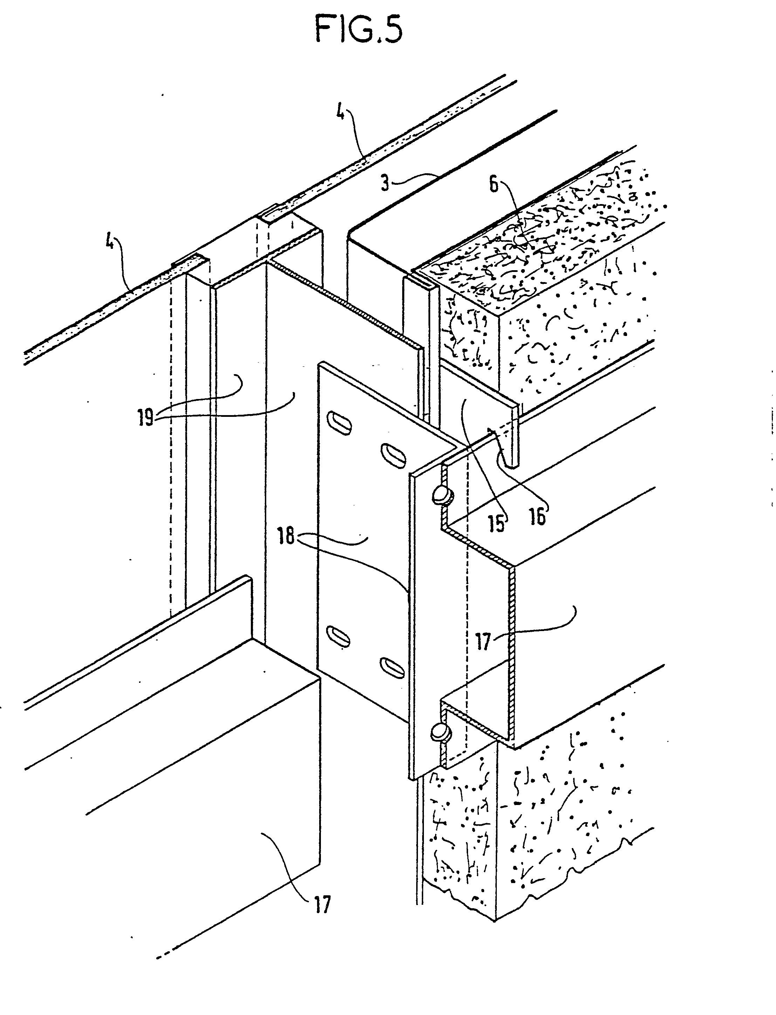

Dans la figure 5 où l'on distingue une partie d'un capteur solaire 3, on voit que ce dernier est maintenu grâce à plusieurs pattes telles que 15 ayant une partie crochue 16 s'appuyant sur un profilé horizontal 17 fixé par des moyens non représentés à la façade 2.

Le même profilé 17 supporte des cornières 18, elle-même fixées à des profilés verticaux 19 portant le vitrage 4.

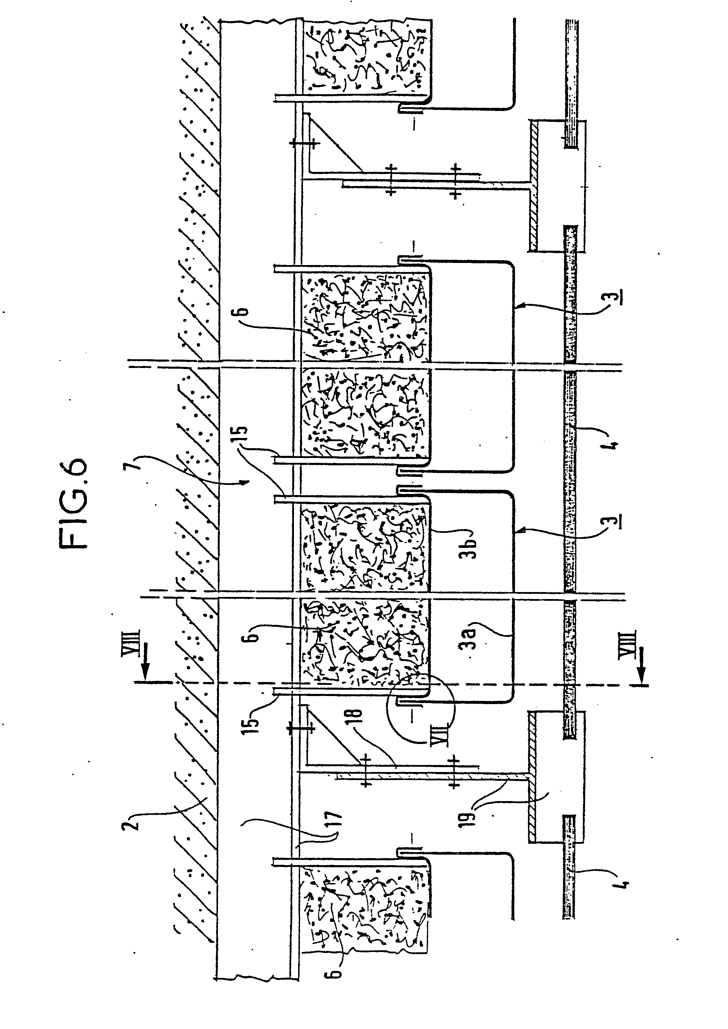

On se référera également, pour la compréhension du montage des divers éléments, à la figure 6.

Dans cette figure, on voit que le capteur 3 est composé d'une première tôle 3a et d'une seconde tôle 3b, définissant à elles deux une surface parallélépipédique rectangle.

La première tôle 3a est émaillée et c'est elle qui est exposée aux rayons solaires qui traversent le vitrage 4.

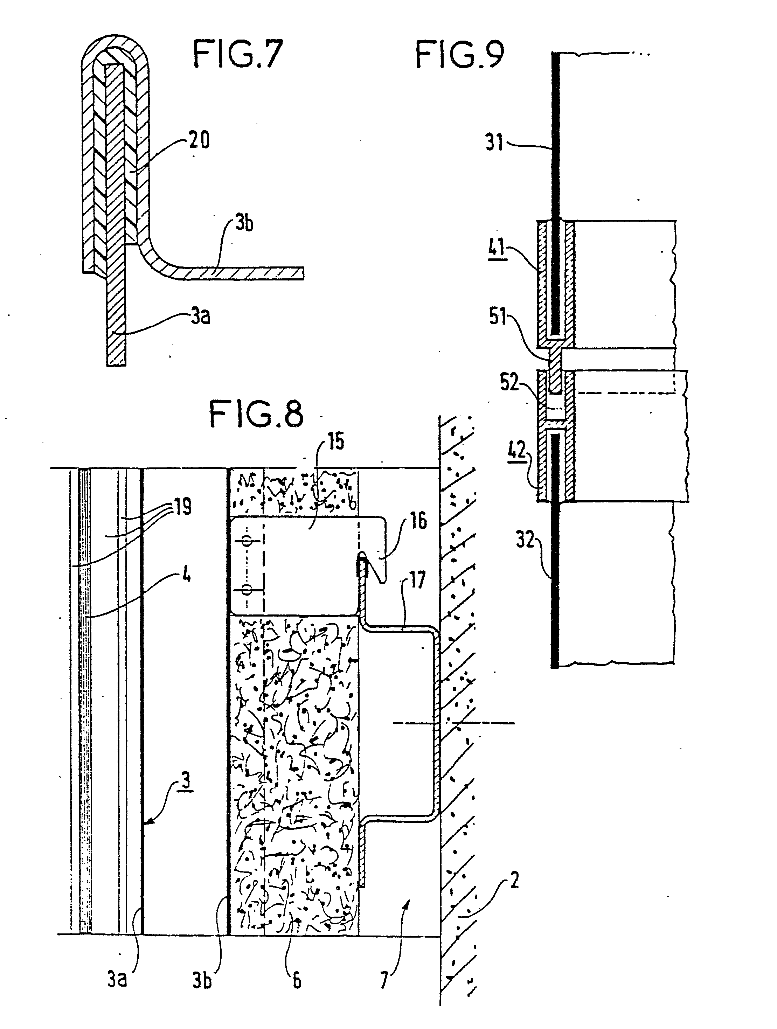

La seconde tôle 3b est galvanisée. La fixation des deux tôles constituant un capteur se fait par sertissage, avec interposition d'un joint 20 d'étanchéité (figure 7), en élastomère de préférence.

C'est avantageusement la tôle galvanisée qui subit le double pliage du sertissage et sur laquelle sont soudées les pattes de fixation.

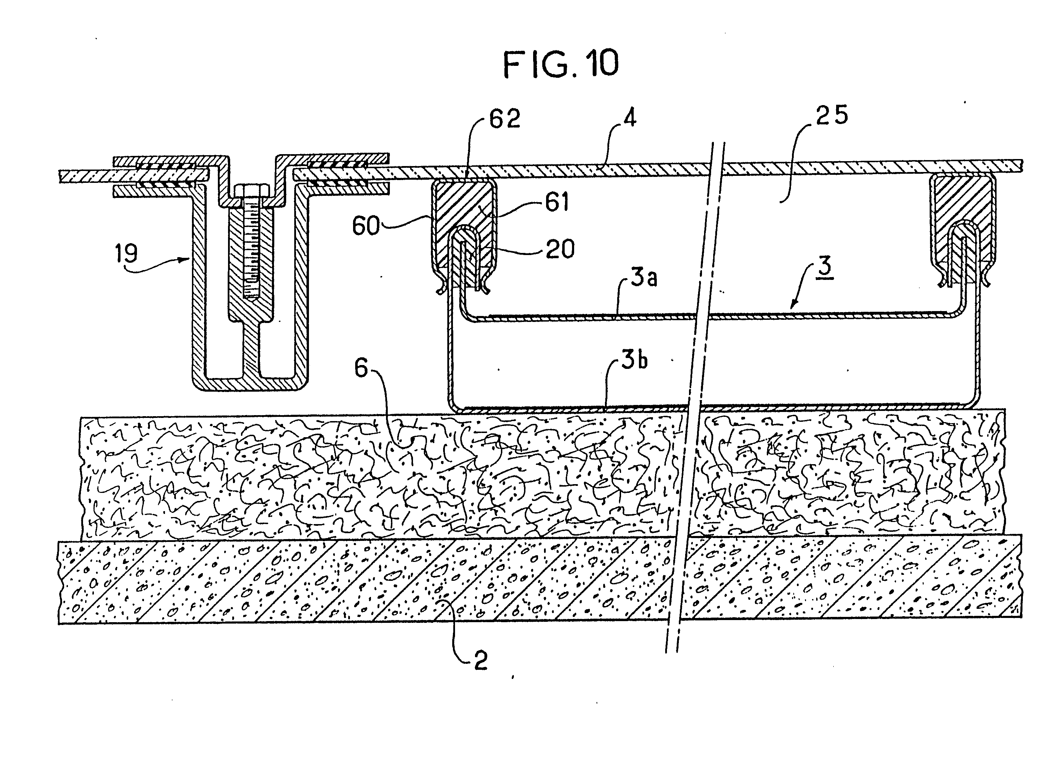

La figure 9 montre le mode de liaison étanche de deux capteurs solaires adjacents 31 et 32 d'une même gaine.

Le capteur supérieur 31 porte sur son bord inférieur un joint annulaire 41 qui est placé à cheval sur ce bord et qui présente une portion en saillie 51.

Le capteur inférieur 32 porte sur son bord supérieur un joint annulaire 42 qui est à cheval sur ce bord et qui présente une partie femelle 52 pouvant coopérer avec la partie en saillie 51 du joint 42.

Ce type de joint, en matériau élastique, assure l'étanchéité des gaines et permet également de compenser les dilatations des capteurs.

La figure 10 est une vue en coupe transversale partielle d'une installation de production d'air chaud selon une variante. Les éléments communs à la figure 10 et aux autres figures ont reçu les mêmes numéros de référence.

Dans la figure 10, la référence 3 désigne un capteur solaire élément d'une gaine verticale de production d'air chaud, disposée entre un mur 2 d'un bâtiment et un vitrage 4, avec interposition d'une couche isolante 6. Le vitrage est maintenu par une charpente métallique 19.

Comme dans les figures précédentes, le capteur est formé d'une première tôle 3a ayant au moins une surface émaillée destinée à être exposée au soleil, et d'une seconde tôle 36 galvanisée. Deux arêtes de la tôle 3a sont repliées une fois et enserrées par un double repli de la tôle 3b de manière à définir un volume fermé. Un joint 20 rend ce volume étanche. Selon une particularité de la variante décrite, les zones de jonction des tôles sont disposées du côté du vitrage.

Par ailleurs, le volume 25 compris entre la gaine et le vitrage, est rendu étanche par interposition d'un joint qui, selon la présente invention, prolonge la zone de jonction des tôles et est constitué par une tôle galvanisée 60, sertie autour de la zone de jonction des tôles 3a, 3b avec interposition d'une matière isolante 61 (telle qu'une mousse de polyuréthane).

La tôle présente une portion plane 62 qui vient s'appuyer contre le vitrage.

Une telle disposition simplifie le montage des installations de climatisation et améliore l'étanchéité du volume 25 dans lequel la lame d'air statique limite les pertes thermiques par convection.

L'invention s'applique à l'équipement de climatisation des constructions d'habitation et des bâtiments industriels.

REVENDICATIONS

1/ Capteur solaire à air, caractérisé en ce qu'il comprend une pluralité de capteurs élémentaires (3), chaque capteur élémentaire étant formé de deux tôles (3a, 3b) assemblées de manière à définir une surface sensiblement parallélépipédique, l'une des tôles (3a) destinée à être exposée au soleil, étant émaillée, l'autre (3b) étant galvanisée, le bord d'un capteur élémentaire étant muni d'un joint (20) assurant une liaison étanche avec le bord d'un capteur élémentaire adjacent, les capteurs élémentaires étant disposés bout à bout de manière à former une gaine.

2/ Capteur solaire selon la revendication 1, caractérisé en ce que le capteur élémentaire est muni d'au moins deux pattes (15) présentant une portion crochue (16) pour être suspendu à un profilé horizontal (17) fixé à une paroi (2) d'un bâtiment.

3/ Dispositif de génération et de circulation d'air chaud alimentant un dispositif de climatisation d'un bâtiment comprenant une pluralité de gaines verticales formées de capteurs solaires adjacents selon la revendication 1, lesdites gaines étant disposées entre une paroi du bâtiment et un vitrage, caractérisé par le fait que les gaines (1a, 1b) sont reliées entre elles deux par deux à leur extrémité inférieure et qu'une gaine (1a) de chaque paire est reliée au voisinage de son autre extrémité, par un premier conduit (9a), à une première canalisation (5a) d'air froid, l'autre gaine (1b) de la paire étant reliée au voisinage de son autre extrémité, par un second conduit (9b) à une seconde canalisation (5b) d'air chaud, lesdites canalisations étant disposées au voisinage du sommet du bâtiment et constituant l'entrée et la sortie dudit dispositif (13) de climatisation du bâtiment.

4/ Dispositif de génération et de circulation d'air chaud selon la revendication 3, caractérisé en ce que les capteurs constituant les gaines sont disposés de manière que les zones de jonction des tôles qui constituent les capteurs soient disposées du côté du vitrage (4), lesdites zones de jonction étant prolongées par un joint pour l'étanchéité du volume (25) compris entre les gaines et le vitrage, comprenant une matière isolante (61) entourant ladite zone et maintenue par une tôle (60) sertie s'appuyant contre le vitrage.

FIG.1

12a  12b   IV

1a
8a
II
5b
13
5a  9a
9b
8b
3
3
11
III  III
10a   IV   10b

FIG.2

2   8a   8b
1a  3  4  1b  6

FIG.3

2   11   11a   7
6
1a  10a   1b  10b
4

FIG.4A

FIG.4B

# FIG.5

# FIG.6

0044256

## FIG.7

20
3b
3a

## FIG.9

31
41
51
52
42
32

## FIG.8

15
19
16
4
17
3
3a  3b  6  7  2

FIG. 10

62  4  25

61

60  20

19  3a  3

3

6  3b

2

6/6

0044256

Office européen
des brevets

**RAPPORT DE RECHERCHE EUROPEENNE**

Numéro de la demande

EP 81 40 1123

| Catégorie | Citation du document avec indication, en cas de besoin, des parties pertinentes | Revendication concernée |
|---|---|---|
| | FR - A - 2 357 840 (B.H.P. CO.) <br> * Page 4, en entier; figure 5 * | 1 |
| | GB - A - 1 551 817 (REAVELL) <br> * Page 2, ligne 51 - page 3, ligne 5; figures 1-3 * | 1 |
| | BE - A - 528 799 (CAILLOL) <br> * Page 1, lignes 34-38; figure 3 * | 1 |
| | CH - A - 579 955 (STUDER) <br> * En entier * | 1 |
| | US - A - 4 098 260 (GOETTL) <br> * En entier * | 1,3,4 |
| | FR - A - 2 416 987 (SOLARON) <br> * Page 4, en entier; page 7, lignes 21-39; figures 1,2,4, 4a * | 1 |
| | DE - A - 2 613 631 (DUEVEL) <br> * Page 14, dernier paragraphe; page 15, premier paragraphe; figures 3,4 * | 1 |
| | ./. | |

**DOCUMENTS CONSIDERES COMME PERTINENTS**

**CLASSEMENT DE LA DEMANDE (Int. Cl.³)**

F 24 J 3/02

**DOMAINES TECHNIQUES RECHERCHES (Int. Cl.³)**

F 24 J
F 24 F

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le present rapport de recherche a été établi pour toutes les revendications

| Lieu de la recherche | Date d'achèvement de la recherche | Examinateur |
|---|---|---|
| La Haye | 23-10-1981 | PERROTTA |

OEB Form 1503.1  06.78

# 0044256

| Catégorie | Citation du document avec indication, en cas de besoin, des parties pertinentes | Revendication concernée | CLASSEMENT DE LA DEMANDE (Int. Cl. 3) |
|---|---|---|---|
| | FR - A - 2 410 229 (SUNTHONE) <br> * Page 6, ligne 37 - page 7, ligne 14; figures 5,6 * | 1 | |
| | FR - A - 2 380 511 (TRIMBOLI) <br> * Page 5, lignes 15-29; figure 6 * | 1 | |
| | US - A - 4 126 270 (HUMMEL) <br> * Colonne 3, lignes 18,19; figure 2 * | 2 | DOMAINES TECHNIQUES RECHERCHES (Int. Cl. 3) |
| | FR - A - 2 420 099 (CHOLEUR) <br> * Page 4, lignes 21-31; figure 1 * | 2 | |
| A | GB - A - 2 009 389 (AGA) <br> * En entier * | | |
| A | FR - A - 2 380 509 (MENE ROUD) <br> * En entier * | | |
| A | US - A - 4 068 652 (WORTHINGTON) <br> * En entier * | | |

DOCUMENTS CONSIDERES COMME PERTINENTS

OEB Form 1503.2  06.78